# EUROPEAN PATENT APPLICATION

(11) **EP 3 944 836 A1**
(43) Date of publication of application: **02.02.2022**
(21) Application number: 20187968.1
(22) Date of filing: 27.07.2020
(51) Int. Cl.: A61C 8/00

(54) **TRANSFER PART OR INSERTION TOOL FOR DENTAL IMPLANT WITH QUICK RELEASE MECHANISM**

(71) Applicant: Ruetschi Technology SA, 3286 Muntelier (CH)
(72) Inventor: RUETSCHI, Christoph, 3280 Murten (CH); CHENAUX, David, 2035 Corcelles (CH)
(74) Representative: Grosfillier, Philippe

(57) **Abstract**

A transfer part for a dental implant including a body portion having a longitudinal axis and including a traversing hole along the longitudinal axis, a center portion arranged in the traversing hole of the body portion, and a fastening mechanism for reversibly securing the transfer part to the dental implant, wherein the center portion and the body portion are configured for a relative motion between each other to switch from a first position to a second position and vice versa, wherein in the first position, the fastening mechanism is in a released state to allow a removal of the transfer part from the dental implant, and in the second position, the fastening mechanism is in an engaged state to allow a securing of the transfer part to the dental implant.

## Description

### FIELD OF THE INVENTION

The present invention relates to a holding piece, transfer part, or insertion tool for a medical implant, in particular a dental implant, for example threaded dental implants or other types of dental implants or artificial teeth.

### BACKGROUND

In the field of dental implants and corresponding systems and tools, dental implants and the corresponding bone anchors or bone fixtures are usually provided to a place of dental surgery in a sterile packaging, as surfaces of these elements are easily contaminated by organic or inorganic contaminants, and surface cleanliness is important for implant osseo-integration. Also, these elements are also very sensitive to abrasion as result of contact with other surfaces. This is accentuated by subjecting the packaged dental implants to vibrations and shock during transportation. The surface of these implants, particularly those parts of the implant which will, in use, be positioned within the bone, herein referred to as bone anchors or bone fixtures, can also be treated to enhance tissue adhesion and bone integration. Such treated surfaces are very sensitive to abrasion or deterioration when placed in contact with other surfaces, and can also suffer contamination. In addition, the bone-integration outer surface of the bone anchor of the dental implant can have fragile porous and jagged surfaces for improving the bone integration to the jaw bone.

To minimize contamination and also abrasion and other degrading effects to the surface and structure of the bone anchor or fixture by contact, implant packaging exists in which the dental implants can be firmly attached to the packaging for transportation and storage. For handling, transportation, jaw bone hole insertion, and jaw bone attachment purposes, the bone anchor or fixture of a dental implant can be temporarily fixed to a so-called holding piece, transfer part, or insertion tool. Some of these packaging for dental implants and other implants allow to hold the bone anchor or fixture substantially arranged inside a packaging wall, while the removable transfer part can be grasped by a user via a cavity in the packaging, for example with two fingers of a dental surgeon or operator, or by the use of an instrument, for example but not limited to a screwdriver, ratchet, tweezer, plier, handpiece.

For example, U.S. Patent No. 8,864,494, this reference herewith incorporated by reference in its entirety, describes a holding piece 1 for a dental implant having a tool retention means adapted to cooperate directly with an insertion tool. The first end 10 of holding piece 1 is intended to be connected to a dental implant 25, and has four resilient elements in form of four flexible arms 45 extending parallel to the longitudinal axis 5. These arms 45 are bendable towards and away from the longitudinal axis 5, and are intended to be inserted inside a blind bore 50 of the dental implant 25. Near the distal end of each of the arms 45 is a snap catch 55 intended to form a snap connection with the internal connection of the implant 25.

Similarly, U.S. Patent No. 9,468,507, this reference herewith incorporated by reference in its entirety, describes an insertion tool 2 for a dental implant, having a dental implant retention element 39, comprising two identically formed longitudinal dental implant retention arms 40a, 40b, extends to the apical end 8. The dental implant retention arms 40a, 40 are separated from each other by a longitudinal slit 42 having an axis coinciding with the longitudinal axis L of the insertion tool 2. In use, the insertion tool 2 is brought into engagement with a dental implant 100 by inserting insertion tool 2 into the implant bore 101. The resilient dental implant retention arms 40a, 40b are thereby compressed inwardly and thereafter contact and press outwardly against the internal wall of the implant bore 101, which creates a press or interference fit between the dental implant 100 and the insertion tool

As discussed above, most of the existing solutions for attaching transfer parts or insertion tools for dental implants rely on a screwable attachment or passive elastic arms, for example two or more retention arms able to provide for a snap connection, for the removable attachment of the transfer part to the dental implant. However, it has been shown that this type of attachment is not secure for transportation, for example transportation of the dental implant and transfer part in a sterile packaging that is subject to vibration or shocks, and that often the transfer part is detached from the dental implant when arriving at a place of dental surgery, for example at the dental practice or dentist. To prevent this, at least some dental implant packaging require an additional component for attachment, for example a spring or a sleeve that is in contact with the implant. The snap connection discussed above usually provides for insufficient retention force, and also inconsistent force among different transfer parts for safe attachment Also, as a result of the inadvertent detachment, for example by knocking it off during a surgical procedure, the transfer part can get lost. The inadvertent detachment and subsequent contact with packaging walls can cause contamination of the dental implant, and can also cause damage to the fragile bone integration structures of the bone anchor or bone fixture.

Moreover, during a dental surgery itself, it is possible that the transfer part is knocked off or otherwise inadvertently removed from the dental implant, leading to problems of contamination, necessity of recovery of the dental implant, transfer part, or both within the mouth cavity of the patient or living being that is subject to a tooth restoration surgery with a dental implant, and the requisite reinsertion of the transfer part to the dental implant, which can be difficult.

Other types of transfer parts are attached to the bone anchor, implant post or fixture by a threading that can engage with a corresponding internal threading of the bone anchor, but these types of transfer parts may be difficult to release from the bone anchor, once bone anchor has been placed into a drill hole of a jaw bone, and can lead to a release of the bone anchor of the dental implant from the jaw bone itself. For example, to release the threadable engagement for removing the transfer part from the bone anchor, the manual rotational operation can be time consuming and difficult due to limited access.

In light of the above-described deficiencies of the state of the art for transfer parts, holding pieces, or insertion tools for dental anchors or fixtures, there is a strong need to provide for substantially improved designs of transfer parts, having a secure but easily releasable attachment mechanism to the bone anchor of the dental implant, and having a simple and reliable design.

### SUMMARY

According to one aspect of the present invention, a transfer part, holding piece, or insertion tool for a dental implant is provided. Preferably, the transfer part, holding piece, or insertion tool for a dental implant includes a body portion having a longitudinal axis and including a traversing hole along the longitudinal axis, a center portion arranged in the traversing hole of the body portion, and a fastening mechanism for reversibly securing the transfer part to the dental implant. Moreover, preferably, the center portion and the body portion are configured for a relative motion between each other to switch from a first position to a second position and vice versa, wherein in the first position, the fastening mechanism is in a released state to allow a removal of the transfer part from the dental implant, and in the second position, the fastening mechanism is in an engaged state to allow a securing of the transfer part to the dental implant.

According to another aspect of the present invention, a dental implant system is provided, including a bone anchor or bone fixture and a transfer part that can releasable engage with the bone anchor or bone fixture. Moreover, preferably, the dental implant system includes a release tool for engaging with the transfer part for its release from the bone anchor or bone fixture.

The above and other objects, features and advantages of the present invention and the manner of realizing them will become more apparent, and the invention itself will best be understood from a study of the following description with reference to the attached drawings showing some preferred embodiments of the invention.

### BRIEF DESCRIPTION OF THE SEVERAL VIEWS OF THE DRAWINGS

The accompanying drawings, which are incorporated herein and constitute part of this specification, illustrate the presently preferred embodiments of the invention, and together with the general description given above and the detailed description given below, serve to explain features of the invention.

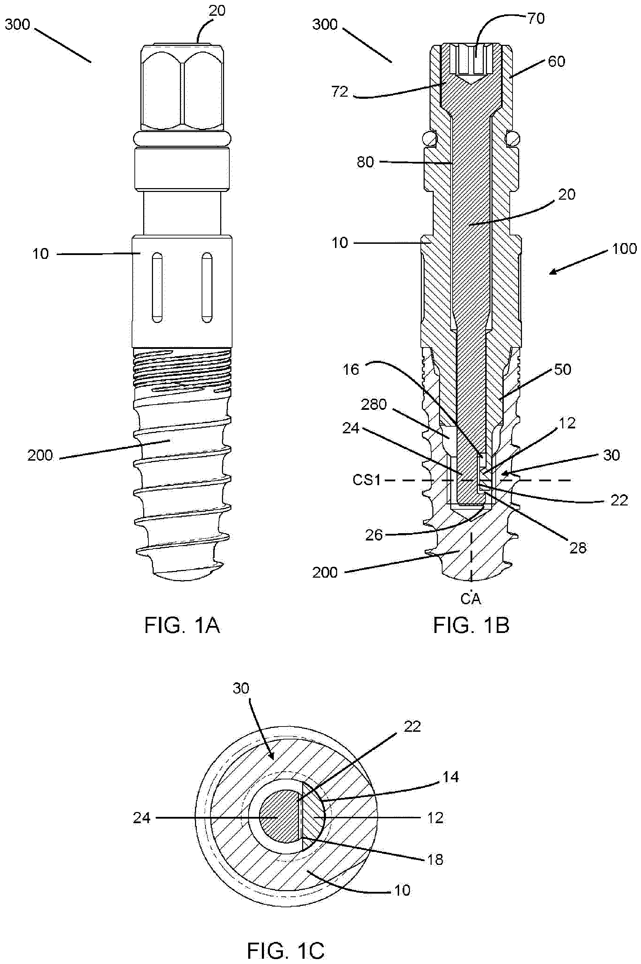

FIGs. 1A to 1C show different exemplary views of the dental implant system 300 including a bone anchor or fixture 200 and a transfer part, holding piece, or insertion tool 100 according to one aspect of the present invention, with FIG. 1A showing a side view thereof, FIG. 1B showing a cross-sectional side view thereof showing body portion 10 having a traversing hole 80 centered along a central axis CA, center portion 20 extending along the traversing hole of body portion 10, and fixation, attachment, or fastening mechanism 30 arranged at the apical side of insertion tool 100, and FIG. 1C showing a cross-sectional view along line CS1 in a viewing direction of the central axis CA, illustrating elements of the fastening mechanism 30;

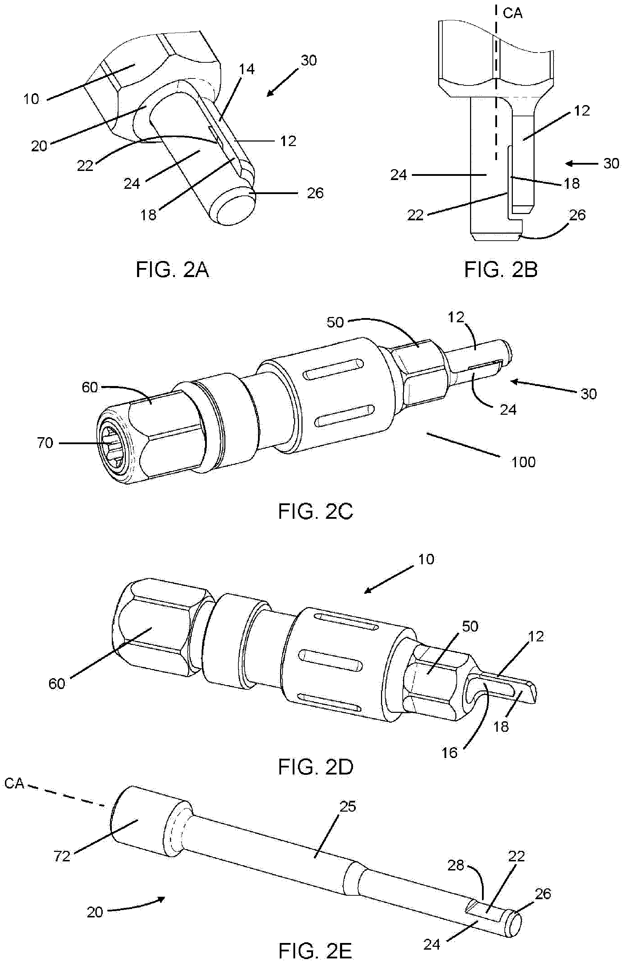

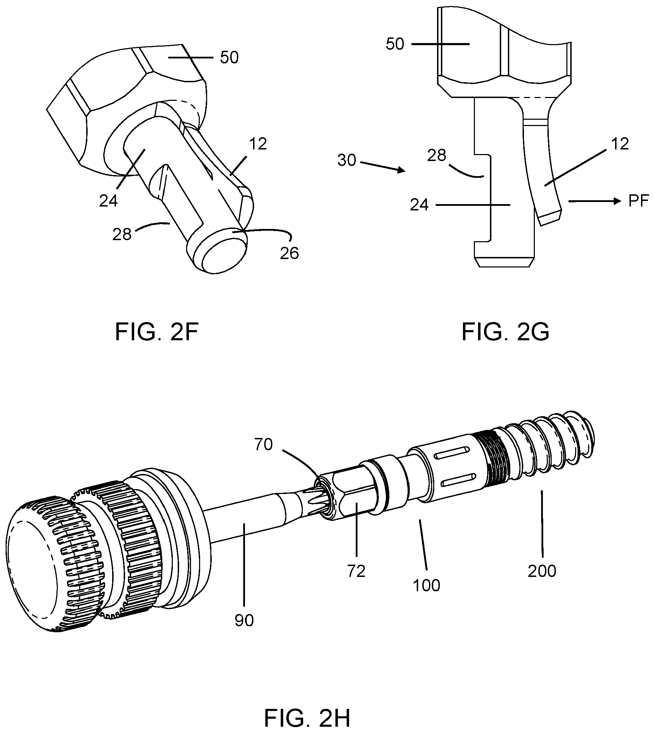

FIGs. 2A to 2H show different exemplary views of transfer part, holding piece, or insertion tool 100 and the elements thereof, with FIG. 2A showing a top front perspective view of fastening mechanism 30 of transfer part 100 in a released, disengaged state showing a bolt 24 having a recess 28 where an engagement surface 22 is formed, and bendable device 12 in the form of a flexible lever that can flexibly and reversibly bend radially outwardly, bolt 24 being an apical-side extension of a center portion 20, and bendable device 12 being an apical-side extension of the body portion 10, FIG. 2B showing a side view of fastening mechanism 30 in the released, disengaged state, FIG. 2C showing a side perspective view of an exemplary transfer part 100, with center portion 20 installed into a traversing hole of body portion 100, FIG. 2D showing a top perspective view of body portion 10 without center portion 20, FIG. 2E showing a top perspective view of center portion 20 without body portion 10, center portion forming a shaft 25 along an axis of longitudinal extension CA, and having a nut or head 72 at a coronal side, and a recess 28 at the apical side, FIG. 2F showing a top front perspective view of fastening mechanism 30 of transfer part 100 in an engaged, expanded state where a part of bolt 24 can urge against bendable device 12 such that bendable device 12 can in turn urge radially outward to create pressing force PF to bone anchor 200, FIG. 2G showing a side view of the engaged, expanded state, and FIG. 2H showing an exemplary top perspective view of a transfer part 100 attached to bone anchor 200, with a release tool 90 engaging with a release tool or torque application tool engagement mechanism 70 of head 72.

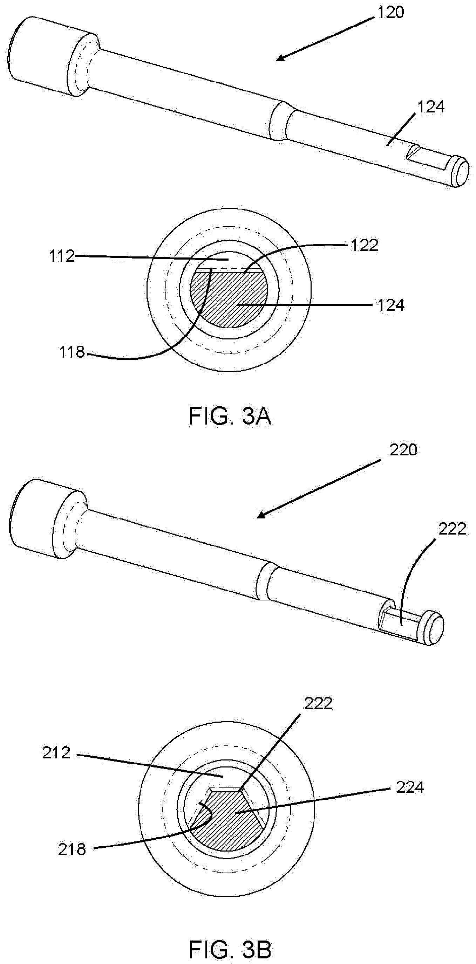

FIGs. 3A and 3B showing alternative embodiments of the center portion 20 in a top perspective view and a cross-sectional view at bolt 24, having different types of engagement surfaces 122;

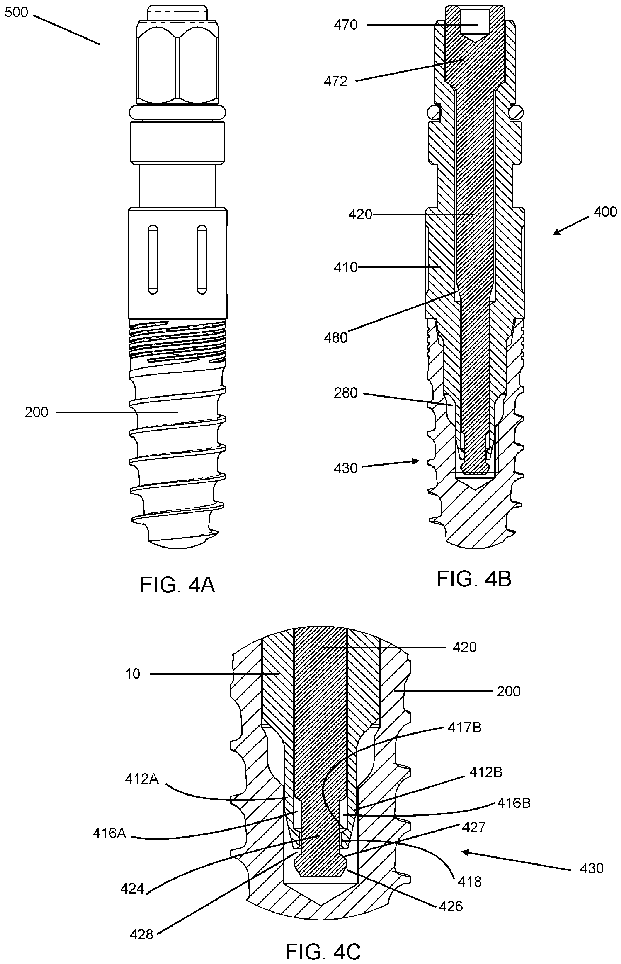

FIGs. 4A to 4C show different exemplary views of the dental implant system 500 including a bone anchor or fixture 200 and a transfer part, holding piece, or insertion tool 400 according to another embodiment, with FIG. 4A showing a side view thereof, FIG. 4B showing a cross-sectional side view thereof showing body portion 410 having a traversing hole 480, center portion 420 extending along the traversing hole 480 of body portion 410, and a fastening mechanism 430 arranged at the apical side of insertion tool 400, and FIG. 4C showing a close-up view of fastening mechanism 430, illustrating elements of the fastening mechanism 430 in an alternative embodiment; and

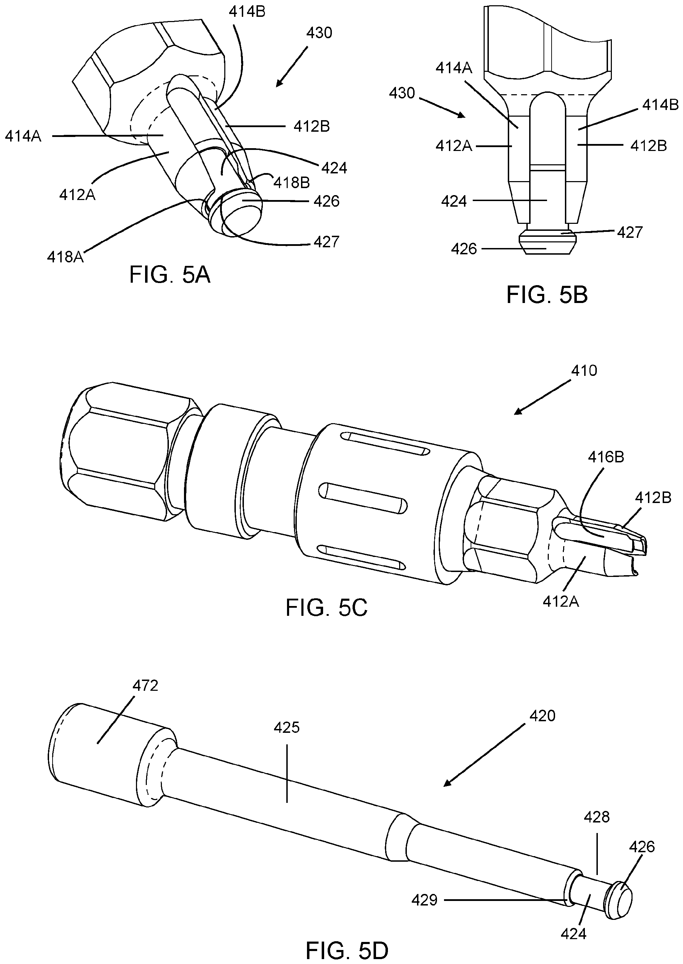

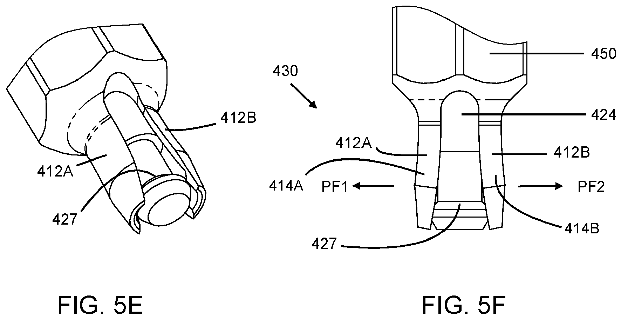

FIGs. 5A-5F show different exemplary views of transfer part, holding piece, or insertion tool 400 and the elements thereof, according to this embodiment, with FIG. 5A showing a top-front perspective view of fastening mechanism 430 of transfer part 400 in a released, disengaged state showing a bolt 424 having a cylindrical recess 428 where a beveled circular edge 427 as an engagement surface is formed, and showing exemplary two bendable devices 412A, 412B in the form of a flexible protruding half-shells, bolt 424 being an apical-side extension of a center portion 420, and bendable devices 412A, 412B arranged facing each other radially, forming an apical-side extension of the body portion 410, FIG. 5B showing a side view of fastening mechanism 430 in the released, disengaged state, FIG. 5C showing a top perspective view of body portion 410 without center portion 420, FIG. 5D showing a top perspective view of center portion 420 without body portion 410, center portion forming a shaft 425 along an axis of longitudinal extension CA, and having a nut or head 472 at a coronal side, and a cylindrical recess 428 at the apical side, FIG. 5E showing a top-front perspective view of fastening mechanism 430 of transfer part 400 in an expanded, engaged state showing bendable devices 412A, 412B radially bent outwardly to create pressing forces PF1, PF2, and FIG. 5F showing a side view of fastening mechanism 430 of transfer part 400 in the expanded, engaged state.

Herein, identical reference numerals are used, where possible, to designate identical elements that are common to the figures. Also, the images are simplified for illustration purposes and may not be depicted to scale.

### DETAILED DESCRIPTION OF THE SEVERAL EMBODIMENTS

According to one aspect of the present invention, a dental implant system 300 is provided including a bone anchor or fixture 200 and a transfer part, holding piece, or insertion tool 100. According to another aspect of the present invention, a corresponding transfer part, holding piece, or insertion tool 100 is provided. For example, dental implant system 300 can include other elements such as but not limited to abutments, crowns, attachment screws, attachment tools such as but not limited to torque wrenches, ratchets. FIGs. 1A to 1C show different exemplary views of the dental implant system 300 including a bone anchor or fixture 200 having a slightly conical threaded bone engagement part, that is removably attached to a transfer part 100. However, other bone anchors 200 can also be used in conjunction with the herein presented transfer part 100, for example bone anchors 200 with non-threadable or expandable engagement with jaw bone JB, for example as shown in European patent application number EP20184074.1. FIG. 1A shows a side view of bone anchor 200 and transfer part 100 inserted thereto, FIG. 1B showing a cross-sectional side view thereof along a cross-sectional surface that traverses the central axis or longitudinal axis of extension CA of bone anchor 100, showing body portion 10 having a traversing hole, the traversing hole 80 having a rotational center that substantially coincides with center axis CA, showing a center portion 20 extending along the traversing hole of body portion 10 in the form of a longitudinal device that can be turned inside traversing hole 80, and fastening mechanism 30 arranged at the apical side of insertion tool 100, for example configured as a quick release mechanism. FIG. 1C showing a cross-sectional view along line CS1 in a viewing direction of the central axis CA, illustrating elements of the fastening mechanism 30. In the context of this specification, the terminology transfer part, holding piece, or insertion tool 100 are interchangeably used for reference numeral 100.

FIGs. 2A to 2E show different exemplary views of transfer part 100 and the different elements thereof, specifically more detailed views of fasting mechanism 30, with FIG. 2A showing a front perspective view of fastening mechanism 30 of transfer part 100 arranged at an apical side, showing a bolt 24 having a recess 28, where an engagement surface 22 is formed at a bottom of recess 28, and showing an reversibly and resiliently bendable or deflectable device 12 in the form of a flexible lever that protrudes in a direction parallel to center axis CA towards the apical side from body portion 10. In this variant, bolt 24 forms an apical-side extension of a center portion 20. Also, in the variant shown, there is only one retention arm 12, but it is possible that there are two or more retention arms, arranged circularly around bolt 24. FIG. 2B shows a side view of fastening mechanism 30 showing the engagement surface 22 that is facing a corresponding engagement surface 18 of bendable device 12, in this relative position between body portion and center portion 20 having a gap therebetween, FIG. 2C showing a side perspective view of an exemplary transfer part 100, with center portion 20 installed into a traversing hole of body portion 100, FIG. 2D showing a top perspective view of body portion 10 without center portion 20 arranged in traversing opening 80, and FIG. 2E showing a top perspective view of center portion 20 without body portion 10, center portion forming a shaft 25 along an axis of longitudinal extension CA, and having a nut or head 72 at a coronal side, and a recess 28 at the apical side.

As shown in FIG. 1B and FIG. 2E, center portion 20 is shown, longitudinally extending along axis CA, having a substantially rotational-symmetric shape other than the recess 28 at bolt 24, including a shaft 25 having a cylindrical shape, a head or nut 72 arranged at the coronal end that can have a larger diameter than a diameter of shaft 25, head 72 accommodating a release tool or torque application tool engagement mechanism 70, for example but not limited to a hex socket, torx socket, XNZ socket, Philips socket. At the apical side, center portion 20 includes elements of a fastening mechanism 30, including a protruding bolt 24 that has a recess 28, recess 28 forming an engagement surface 22 as a bottom surface, arranged to be parallel to axis CA. In addition, at the apically-facing end or front tip of bolt 24, a circularly-surrounding beveled or oblique edge 26 is arranged. In the variant shown, center portion 20 has a decreasing diameter from the coronal side to the apical side, with head 72 having the widest diameter, and bolt 24 having the smallest diameter. This allows to insert center portion 20 to traversing hole 80 of body portion from the coronal side. Traversing hole 80 has a diameter that is slightly wider than at a corresponding location of center portion 20.

Moreover, as shown in FIG. 1B and FIG. 2D, body portion 10 that can accommodate center portion 20 is formed substantially as a cylindrically-shaped element around center axis CA, having a drive tool engagement section 60 for engagement with different types of manual or powered drive tools, for example but not limited to a hex bit structure, torx structure, XNZ structure, a torque applying section 50 configured to engage with a corresponding torque receiving section of blind bore or fixation opening 280 of bone anchor 200, for example a hex bit structure. At the apical side, body portion 10 also includes elements of fastening mechanism 30, including bendable device 12 formed as a protruding extension of body portion 10, forming a elastically flexible lever that can reversibly flex radially away from center axis CA, having an engagement surface 18 for engaging with the corresponding engagement surface 22 of bolt 24, and having a recess or opening 16 for accommodating a portion of bolt 24.

As shown in FIGs. 1B and 2C, center portion 20 and body portion 10 are configured such that center portion 20 can be inserted and pushed into traversing hole 80 of body portion 10 from the coronal side opening, and once bolt 24 on apical side reaches bendable device 12, center portion 20 is then snapped-in, snapped-locked or clipped to body portion 10 by using oblique edge 26 of bolt 24 as a push mechanism to radially and outwardly push bendable device 12 away from center axis CA, once bolt 24 arrives at an end of recess or opening 16 of bendable device 12. This allows front tip of bolt 24 and oblique edge 26 to pass front tip of bendable device 12. Thereafter, bendable device 12 flexes back towards center axis CA to its initial, neutral, or rest position, to lie within opening 28 of bolt 24. With this snap-in or snap-lock mechanism, center portion 20 is firmly installed inside body portion 10, substantially within traversing hole 80, whilst bolt 24 protrudes at an apical side or front end of body portion 10, with a simple mechanical design, only requiring two different elements.

Next, the operation of fastening mechanism or quick release mechanism 30 is described. Once center portion 20 is installed to body portion 10, center portion 20 is movable relative to body portion 10 from a first unlocked or disengaged position to a second locked or engaged position of fastening mechanism 30, and vice versa. In the variant shown, center portion 20 can be turned around center axis CA relative to body portion 10 by a certain angle from a first angular position to a second angular position, and vice versa. In the first angular position of center portion 20 relative to body portion 10, exemplarily shown in FIGs. 2A and 2B, engagement surface 22 of bolt 24 does not urge against corresponding engagement surface 18 of bendable device 12, and therefore bendable device 12 in a relaxed position, extending parallel to central axis CA. As shown in FIGs. 1B and 1C, in this first position, cylindrical outer surface 14 of bendable device 12 therefore does not exert any or only very little force against an inner wall of bore 280 of bone anchor 200, and therefore, transfer part 100 can be easily removed from bone anchor by pulling transfer part 100 away from bone anchor 200 in a coronal direction along central axis CA, and can also be inserted to bone anchor 200 in an apical direction along central axis CA. In other words, in the first position, center portion 20 is configured to disengage from or release fastening mechanism 30 to allow a removal and insertion of transfer part 100 form or to bone anchor 200.

To secure or fasten transfer part 100 to bone anchor 200 of a dental implant system 300, center portion 20 is turned around center axis CA relative to body portion 10 by a certain angle from a first angular position to a second angular position. In the variant shown, the turning can be clockwise or counterclockwise. For example, it is possible that center portion 20 is turned above 45° or more relative to body portion 10, for example by 90°, so that engagement surface 22 of bolt 24 engages with engagement surface 18 of bendable device element 12, so that bendable device 12 is urged outwardly in a radial direction away from center axis CA, and in turn outer engagement surface 14 of bendable device 12 will press against inner wall of bone anchor 200, as shown in FIGs. 2F and 2G. For example, outer surface 14 of bendable device 12 can urge against inner wall of bore 280 of bone anchor 200 at a location of an attachment threading for an attachment screw for dental abutment, with the rough surface of the threading providing for additional resistance to a removal of transfer part 100 in the second position. In this respect, a rotational torque applied to center portion 20 relative to body portion 10 will translate into a pressing force PF of bendable device 12 towards inner wall of bore 280 of bone anchor 200, or another part of bone anchor 200. This pressing force PF is configured to securely attach transfer part 100 to bone anchor 200 in this second position, applying a force of about 5 N or more.

In addition, bolt 24 itself can also bend outwardly in a second radial direction that is opposite to the radial direction of the bending of bendable element 12 towards inner wall of bore 280, by the transition from the first position to the second position, and a surface of bolt 24 can also urge an apply a second pressing force PF to inner wall of bore 280 of bone anchor 200, for example an edge right at oblique edge 26, to provide for an additional retention force to reversibly secure transfer part 100 to bone anchor 200. In this respect, in the engaged or secured state, bendable element 12 provides a first releasable retention or pressing force while bolt 24 can provide for a second releasable retention or pressing force that is arranged substantially opposite in a direction and axi-symmetric around axis CA to first pressing force PF for retention of transfer part 100 to anchor 200.

To return back to the first position, in the variant shown, center portion 20 is turned back an angle relative to body portion 10 until engagement surface 22 of bolt 24 disengages or releases from engagement surface 18 of bendable device element 12, so that bendable device 12 reverts back inwardly in a radial direction towards center axis CA, and in turn outer engagement surface 14 of bendable device 12 will disengage or release from inner wall of bone anchor 200. This is possible by bendable element 12 being flexible and reverting back to an initial, neutral, or rest position, extending substantially parallel to central axis CA. In this respect, a thickness of a wall of bendable element 12 at a location of recess or opening 16 can be made such that an outward an reversible bending can occur with a force of about 2 N or more.

The turning of center portion 20 relative to body portion 10 to switch back and forth from first position to second position can be configured to require a torque in a range of 10 Ncm to 100 Ncm, more preferable in a range between 5 Ncm to 50 Ncm, and can be done manually or by the use of a release tool 90 that can removably engage with release tool or torque application tool engagement mechanism 70 of head 72 as shown in FIG. 2H, or by a manual turning engagement with an extension of center portion 20 on the coronal side that protrudes from body 10, for example a device that is configured for manual engagement and turning, for example but not limited to a coronal-side element such as a knob, dial, dented wheel, lever, handle, bolt, plate. Release tool 90 can be embodied in different ways, for example but not limited to a screw driver, mirror, tweezer, probe, handle, bolt, dial.

The torque for releasing transfer part 100 can also be designed such that it is smaller than an attachment torque of jaw bone anchor 200 to drill hole of jaw bone JB that is typically in a range between 30 Ncm and 50 Ncm. As another aspect, transfer part 100 and fastening mechanism 30 can be configured such that a rotation of center portion 20 relative to body portion 10 for releasing transfer part 100, in other words to switch from the second position to the first position, is in a rotational direction that is the same as the attachment torque of bone anchor 200 to jaw bone JB for the threadable engagement. This allows to release transfer part 100 from bone anchor 200 in a rotational direction that does attempt to release bone anchor 200 from jaw bone JB, and in light of a release torque to switch from the second to the first position being lower than an attachment torque of bone anchor 200, does not add additional tightening torque of bone anchor 200 to jaw bone when releasing transfer part 100. Typically, an attachment torque for threadable engagement of bone anchor 200 with drill hole of jaw bone would be applied in a clockwise rotational direction, so fastening mechanism 30 is configured such that a rotation or turning of center portion 20 for releasing transfer part 100 from bone anchor 200 would also be in a clockwise rotational direction.

In the variant shown, outer engagement surface 14 is cylindrically-shaped with a radius or curvature to substantially match a curvature of blind bore 280 of bone anchor 200. In a variant, it is also possible that outer surface 14 that engages with bone anchor 200 includes structures to increase a retention force of transfer part 100 to bone anchor 200, for example but not limited to one or more ridges that are arranged substantially perpendicular to central axis CA, knobbed surface, retention ramps or saw-tooth structure, or can include a soft coating for increasing a retention force.

FIGs. 3A and 3B show alternative embodiments for the configuration of bolt 124, 224 of center portion 120, 220 and the engagement surface 122, 222 of body portion 110, 210, for example FIG. 3A showing a bolt 124 having a cylindrical diameter that is slightly smaller than a diameter of blind bore 280 of bone anchor 200, and bendable element 112 having substantially the same diameter. With engagement of engagement surface 122 of bolt 124 and engagement surface 118 of bendable element 112, both outer cylindrical surfaces of bolt 124 and outer cylindrical surface of bendable element 112 can both urge against inner walls of blind bore 280 of bone anchor 200, for a more reliable mechanical fastening. This requires bolt 124 is capable of radially bending outwardly away from axis CA when center portion 120 is turned from the first to the second position.

FIG. 3B shows a variant where engagement surfaces 222 of bolt 224 and engagement surface 218 of reversibly bendable element 212 include several surfaces having different angular orientations towards each other, in the variant shown three (3) different surfaces. As another variant, it is possible that engagement surface 22 forms an eccentric cam lobe surface for progressive application of an increased a pressing force PF with bendable device to inner wall of bone anchor 200. As another variant, surface 22 of bolt 24 could form a cylindrically-shaped threading that can threadably engage with a corresponding conically-shaped threading at inner surface 18 of one or more bendable elements 12, such that a threadable engagement of the cylindrically-shaped threading with the conically-shaped threading will advance the bolt 24 to expand the bendable elements 12 to provide for the pressing force PF. In a variant, bendable element 12 has a threading and is in an inwardly slanted position to be bent outwardly upon a threadable engagement with bolt 24, to thereby establish pressing force PF. In this respect, the transition from the first, unlocked position to the second, locked position and vice versa is done by a combination of a threadable engagement of center portion 20 with body portion 10, being combined rotational movement around central axis CA, and a linear translation movement in a direction of central axis CA.

FIGs. 4A to 4C show different exemplary views of another embodiment of the herein presented dental implant system 500 including a bone anchor or fixture 200 and a transfer part, holding piece, or insertion tool 400, in which the engagement and disengagement of fastening mechanism 430 of transfer part 400 includes a linear motion of the center portion 420 relative to body portion 410 in both directions along axis CA to two move back and forth from the first position to the second position, where in the variant shown, a transfer from the first position to the second position causes an urging of a circular beveled edge 427 at a tip of bolt 424 against one or more a corresponding edges 418A, 418B of retention arms 412A, 412B, such that retention arms 412A, 412B are pressed radially outwardly against an inner wall of blind bore 280 of dental implant 200. FIG. 4A showing a side view of this embodiment showing dental implant system 500, FIG. 4B showing a cross-sectional side view thereof showing body portion 410 having a traversing hole 480, center portion 420 extending along the traversing hole 480 of body portion 410, and a fastening mechanism 430 arranged at the apical side of insertion tool 400, and FIG. 4C showing a close-up view of fastening mechanism 430, illustrating elements of the fastening mechanism 430. In the variant shown, retention arms 412A, 412B are made of hollow cylindrical shells having a cavity 416A, 416B formed therein, providing for the requisite elastic flexibility for radial expansion and contraction, separate by a slit or gap. Exemplarily, two (2) retention arms 412A, 412B are shown, but there could be only one retention arm, or more than two (2) retention arms, for example for (4) or another number of bendable retention arms 412, arranged equi-angularly around bolt 424.

FIGs. 5A to 5F show different exemplary views of transfer part 400 with the two exemplary retention arms or bendable devices 412A, 412B. For example, FIG. 5A shows a top-front perspective view of fastening mechanism 430 of transfer part 400 in a relaxed or disengaged state showing a bolt 424 having a cylindrical recess 428 where a beveled circular edge 427 as an engagement surface is formed, and also showing exemplary two bendable devices or retention arms 412A, 412B in the form of a flexible protruding half-shells, bolt 424 being an apical-side extension of a center portion 420, and bendable devices 412A, 412B arranged facing each other radially opposite to each other, forming an apical-side extension of the body portion 410. FIG. 5B shows a side view of fastening mechanism 430 with the two exemplary retention arms 412A, 412B shown in a relaxed or disengaged state, FIG. 5C showing a top perspective view of an exemplary body portion 410 without center portion 420, FIG. 5D showing a top perspective view of an exemplary center portion 420 without body portion 410, center portion 420 forming a shaft 425 along an axis of longitudinal extension CA, and having a nut or head 472 at a coronal side, and a cylindrical recess 428 at the apical side around bolt 424, with a tip portion at the apical side having beveled circular edge 427. FIG. 5E shows a top-front perspective view of fastening mechanism 430 of transfer part 400 in an expanded, engaged state showing bendable devices 412A, 412B radially bent outwardly towards an inner wall of bone anchor 200 (not shown in this picture) to create symmetrically-opposing pressing forces PF1, PF2 that can engage with an inner wall of bone anchor 200, and FIG. 5F showing a side view of fastening mechanism 430 of transfer part 400 in the expanded or engaged state.

To assemble the transfer part 400, center portion 420 can be inserted to body portion 410 via traversing hole 480 for example by being manually pressed therein from the coronal side opening, and by the pressure or force caused to the apical side, the oblique circular edge 426 at the apical-side or front facing tip of bolt 424 presses both retention arms 412A, 412B radially outwardly, and after additional downward or apical-side linear movement of center portion 420 relative to body portion 410, tip of bolt 424 passes tips of retention arms 412A, 412B such that retention arms 412A, 412B revert back to a relaxed, rest or initial position, to be located and snap into cylindrical recess 428 that is formed around bolt 424. Thereby, center portion 420 is secured to body portion 410 by this snap-in or snap-lock mechanism.

Next, to switch fastening mechanism 430 from the first, relaxed, unlocked or disengaged position to the second, locked, expanded or engaged position, center portion 420 can be pulled upwardly relative to body portion 410, by a relative linear motion or displacement in a first direction, so that circular beveled edge 427 facing towards the coronal side of tip of bolt 424 engages with corresponding edges or surfaces 418A, 418B of retention arms 412A, 412B, and the upward pulling force will radially spread out retention arms 412A, 412B away from axis CA, as shown in FIGs. 5E and 5F. In turn, at least a portion of outer engagement surfaces 414A and 414B of the corresponding retention arms 412A, 412B will urge with pressing or retention forces PF1, PF2 against inner walls of blind bore 280 of bone anchor 200, for example with the arcuate edge that is formed at engagement surfaces 414A, 414B. Upon pushing down center portion 420 relative to body portion 410 by a relative linear displacement or motion in the opposite direction of the first direction, fastening mechanism returns to the first, unlocked position, where circular beveled edge 427 of the coronal side of tip of bolt 424 disengages from edges or surfaces 418A, 418B of corresponding retention arms 412A, 412B, and thereby outer engagement surfaces 414A and 414B of the corresponding retention arms 412A, 412B disengage retention or pressing forces PF1, PF2 from inner walls of blind bore 280 of bone anchor 200. In this first position, transfer part 400 can be removed from bone anchor 200 by a simple by a manual operation by pulling transfer part 400 in a direction along axis CA away from bone anchor 200, and can also be inserted to bone anchor 200 in the opposite direction. The switch from the second, locked position to the first, unlocked position therefore can require a simple manual push of center portion 420 at a coronal side thereof that protrudes from body portion 410.

In a variant, transfer part 400 can be released from bone anchor 200 by pulling center portion 420 relative to body portion 410 instead of pushing, to inverse a release direction of fastening mechanism 430 from the above described embodiment. In such variant, bolt 424 can be dimensioned such that a second circular beveled edge 429 located within cylindrical recess 428 can engage with edges 417A, 417B located inside cavities 416A, 416B, of corresponding retention arms 412A, 412B to spread apart retention arms 412A, 412B by a linear force in a direction towards the apical side on center portion 420, to switch from an first unlocked position to a second locked position. Thereafter, by pulling center portion 420, for example by a protruding portion or element at a coronal side thereof, linearly upwardly relative to body portion 410, it is possible to release pressure caused by second circular beveled edge 429 to edges 417A, 417B of corresponding retention arms 412A, 412B, to switch from the second, locked position to the first, unlocked position.

With the above-described embodiments, it is possible to provide for a simple and effective transfer part 100, 400, that is capable of providing a sufficient, durable, and easy-removable retention or attachment force to secure transfer part 100, 400 to a bone anchor 200, or other type of implant device, having an force that is sufficient to withstand shocks during transportation and handling of the dental implant during the surgical procedure when attaching the implant to a bone. During handling, it is not possible to easily knock off the transfer part 100, 400 from an anchor 200. In addition, the above described transfer part 100, 400 can be made solely from two different parts, the center portion 20, 120, 220, 420, and a corresponding body portion 10, 110, 210, 410, with the elements of the fastening mechanism 30, 430 integrated to the center portion and body portion, respectively, for example made of stainless steel, titanium-based material, or medical grade plastics, for example poly ether ether ketone (PEEK), acetal copolymer (POM-C), polycarbonate (PC), providing for a cost-effective, simple and reliable solution for transporting and handling implants.

The herein presented transfer parts 100, 400 that are described in the context of a dental implant system, for removable attachment to a dental implant, for example bone anchor or fixture 200. However, the same transfer part 100, 400 with its attachment mechanism 30, 430 can also be used for attachment to other types of implants and bone screws. As non-limiting and non-exclusive examples, transfer part 100, 400 could be used for removable attachment to a spinal implant, bone screws for bone fixation plates, bone fixation plates for different bone fractures, for example mandibular and maxillofacial fractures, fixation rods.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

## Claims

1. A transfer part for a dental implant comprising:
a body portion having a longitudinal axis and including a traversing hole along the longitudinal axis;
a center portion arranged in the traversing hole of the body portion; and
a fastening mechanism for reversibly securing the transfer part to the dental implant,
wherein the center portion and the body portion are configured for a relative motion between each other to switch from a first position to a second position and vice versa, wherein in the first position, the fastening mechanism is in a released state to allow a removal of the transfer part from the dental implant, and in the second position, the fastening mechanism is in an engaged state to a allow a securing of the transfer part to the dental implant.

2. The transfer part according to claim 1, wherein the fastening mechanism includes:
an engagement surface that is operatively connected to the center portion; and
a bendable device that is operatively connected to the body portion,
wherein upon the relative motion of the center portion relative to the body portion from the first position to the second position, the engagement surface is configured to urge against the bendable device, such that the bendable device is configured to press against the dental implant to secure the transfer part to the dental implant.

3. The transfer part according to claim 2, wherein the engagement surface includes a cam arranged at an apical side of the center portion, and the bendable device includes a retention arm that is arranged at an apical side of the body portion,
wherein the relative motion from the first position to the second position includes a rotation of the center portion relative to body portion, to urge the cam against the retention arm so that the retention arm is configured to press against a wall of the dental implant.

4. The transfer part according to claim 3, wherein the center portion includes a bolt arranged at the apical side having a cut-out surface in parallel to the longitudinal axis, the cut-out surface forming the cam, and the retention arm includes an outer surface configured to press against the dental implant.

5. The transfer part according to claim 2, wherein to center portion includes an oblique edge and a recess at the apical side, the oblique edge and the recess permitting a securing of the center portion in the traversing hole of the body portion, by radially extending the bendable device and snap-locking the center portion with a portion of the bendable device located in the recess, when center portion is inserted to the traversing hole.

6. The transfer part according to claim 2, wherein the engagement surface includes a beveled edge arranged at an apical side of the center portion, and the bendable device includes a retention arm that is arranged at an apical side of the body portion,
wherein the relative motion from the first position to the second position includes a linear motion of the center portion relative to body portion, to urge the beveled edge of against the retention arm so that the retention arm is configured to press against a wall of the dental implant.

7. The transfer part according to claim 5, wherein the center portion includes a bolt arranged at the apical side having the beveled edge forming a circular conical structure around the bolt, where the retention arm includes one or more radially expandable levers configured to urge against the dental implant by a pressure caused by the beveled edge of the center portion upon the linear motion from the second position to the first position.

8. The transfer part according to claim 1, wherein the center portion further includes:
a torque applying section configured to engage with a corresponding torque receiving section of the bone anchor; and
a drive tool engagement section.

9. The transfer part according to claim 1, wherein the center portion further includes:
a head portion protruding from the body portion, the head portion configured for manual application of the relative motion between the center portion and the body portion.

10. The transfer part according to claim 1, wherein the center portion further includes:
a head portion protruding from the body portion, the head portion including a release tool engagement mechanism for applying the relative motion between the center portion to the body portion.

11. The transfer part according to claim 1, wherein the fastening mechanism includes:
a protrusion having a first threading arranged at an apical side of the center portion; and
a bendable device having a second threading arranged at an apical side of the body portion,
wherein the relative motion includes a threadable engagement of the first threading with the second threading, and the bendable device is configured such that the first threading urges against the bendable device to press against the dental implant to secure the transfer part to the dental implant.

12. The transfer part according to claim 2, wherein upon the relative motion of the center portion relative to the body portion from the first position to the second position, an apical side of the center portion is configured to bent and press against the dental implant to further secure the transfer part to the dental implant, as a result of the engagement surface urging against the bendable device.

13. A dental implant system comprising:
a bone anchor;
a transfer part according to claim 1; and
a release tool for engaging with the transfer part for performing the relative motion.
